# EUROPÄISCHE PATENTSCHRIFT

(11) **EP 1 606 156 B1**
(45) Veröffentlichungstag und Bekanntmachung des Hinweises auf die Patenterteilung: **04.04.2007**
(21) Anmeldenummer: 04719935.1
(22) Anmeldetag: 12.03.2004
(51) Int. Cl.: B62D 7/14

(54) **LENKVORRICHTUNG FÜR FAHRZEUGE MIT EINEM FREI DURCH SEITENKRÄFTE LENKBAREN RADPAAR**
STEERING DEVICE FOR VEHICLES COMPRISING A PAIR OF WHEELS WHICH CAN BE FREELY STEERED BY MEANS OF LATERAL FORCES
SYSTEME DE DIRECTION POUR VEHICULES COMPRENANT UNE PAIRE DE ROUES POUVANT ETRE DIRIGEES LIBREMENT PAR DES FORCES LATERALES

(30) Priorität: 13.03.2003 DE 10310942
(43) Veröffentlichungstag der Anmeldung: 21.12.2005
(73) Patentinhaber: KNORR-BREMSE SYSTEME FÜR NUTZFAHRZEUGE GMBH, 80809 München (DE)
(72) Erfinder: HUMMEL, Stefan, 70191 Stuttgart (DE); HECKER, Falk, 71706 Markgröningen (DE); HORN, Matthias, 74736 Hardheim (DE); SCHRAMM, Herbert, 71229 Leonberg (DE)
(74) Vertreter: Schönmann, Kurt
(86) Internationale Anmeldenummer: PCT/EP2004/002594
(87) Internationale Veröffentlichungsnummer: WO 2004/080783

(56) Entgegenhaltungen:
- EP-A- 0 508 431
- EP-A- 1 215 104
- DE-A- 2 948 181
- DE-A- 19 803 745

## Beschreibung

Die vorliegende Erfindung betrifft eine Lenkvorrichtung für Fahrzeuge gemäß dem Oberbegriff des Patentanspruches 1.

Eine solche Lenkvorrichtung ist aus der DE 198 03 745 A1 bekannt. Das dort beschriebene Fahrzeug hat eine frei lenkbare Achse, die auch als selbstlenkende Achse bezeichnet wird, wobei deren Lenkung in Abhängigkeit von vorgegebenen Betriebszuständen des Fahrzeuges arretierbar ist. Insbesondere soll diese Lenkung bei Überschreiten einer Mindestgeschwindigkeit des Fahrzeuges arretiert werden. Weiter sind Sensoren zur Erfassung der Fahrzeuggeschwindigkeit, des Lenkwinkels der lenkbaren Achse und des Bremsdruckes vorgesehen, die mit einer Steuerelektronik verbunden sind. In Abhängigkeit von vorgegebenen Meßwerten der Sensoren gibt die Steuerelektronik eine Arretierungseinrichtung für die selbstlenkende Achse frei oder aktiviert diese.

Die DE 100 65 186 A1 beschreibt eine hydraulisch betätigte Lenkvorrichtung eines Nutzfahrzeuges mit zwei aktiv durch eine Hydraulik lenkbaren Achsen. In den Hydraulikkreis ist ein elektronisch steuerbares Dämpfungsventil eingeschaltet, welches in Abhängigkeit vom Beladungszustand des Fahrzeuges auf eine gespeicherte Kennlinie einstellbar ist.

Die DE 198 12 238 A1 beschreibt ein Verfahren zur Regelung des Gierverhaltens von Fahrzeugen. Sensoren für die Fahrzeuggeschwindigkeit und den Lenkwinkel sind mit einer Steuereinheit verbunden, die die Gierrate des Fahrzeuges ermittelt. Zwei unabhängige Regelkreise für einen Lenk- und einen Bremseingriff regeln die Gierrate nach einem vorgegebenen Sollwert.

Schwere LKWs und manche Busse haben zusätzlich zu einer vom Fahrer lenkbaren Vorderachse und einer angetriebenen, nicht lenkbaren Hinterachse eine dritte Achse. Wenn die dritte Achse hinter der angetriebenen Achse angeordnet ist, wird sie als "Nachlaufachse" bezeichnet.

Man unterscheidet zwischen Fahrzeugen, bei denen die dritte Achse starr, d.h. nicht lenkbar ist und solchen, bei denen sie lenkbar ist. Bei lenkbaren dritten Achsen wird weiter unterschieden zwischen solchen, die mit der Vorderachslenkung kinematisch gekoppelt sind, d.h. die automatisch vom Fahrer mit der Vorderachse mitgelenkt werden und sog. " Seitenkraft gelenkten Achsen". Seitenkraft gelenkte Achsen sind nicht mit dem Lenksystem des Fahrzeuges gekoppelt und werden deshalb auch als "frei lenkbare Achsen" bezeichnet. Wenn das Fahrzeug eine Kurve fährt, dann entstehen zwischen der Fahrbahn und den Rädern der Seitenkraft gelenkten Achse seitlich gerichtete Zwangskräfte, die zu einem "automatischen" Lenkeinschlag führen.

Im Vergleich zu anderen mehrachsigen Fahrzeugen, bei denen mehrere Achsen starr, d.h. nicht lenkbar hintereinander angeordnet sind, ist der Reifenverschleiß bei Fahrzeugen mit lenkbaren "Zusatzachsen", insbesondere bei Kurvenfahrten mit niedrigen Geschwindigkeiten geringer, und das Fahrzeug weist eine größere Wendigkeit auf. Als nachteilig wird jedoch angesehen, dass Fahrzeuge mit einer oder mehreren frei lenkbaren Achsen gegenüber solchen mit nicht lenkbaren Achsen eine geringere "Seitensteifigkeit" und somit eine schlechtere Kurvenstabilität haben.

Insbesondere bei geringen Reibwerten bzw. bei glatter Fahrbahn neigen Fahrzeuge mit frei lenkbaren Achsen eher zum Übersteuern als Fahrzeuge mit starren Achsen. Die Übersteuerneigung wird noch verstärkt, wenn die nicht gelenkte Achse angetrieben ist und zusätzlich zu den Seitenführungskräften auch noch Antriebskräfte übertragen müssen.

Aus anmelderinternem Stand der Technik sind Fahrzeuge mit einer zweiten Hinterachse bekannt, die Seitenkraft gelenkt ist, wobei die Seitenkraft gelenkte Achse "bei Bedarf" feststellbar ist, d.h. bei denen der Lenkungsfreiheitsgrad gesperrt werden kann. Die Feststellung bzw. Sperrung folgt dabei ausschließlich in Abhängigkeit von der Fahrzeuggeschwindigkeit, wobei die Achse ab einer bestimmten Mindestgeschwindigkeit gesperrt wird. Solche Fahrzeuge weisen gegenüber Fahrzeugen mit nicht sperr barer Seitenkraft gelenkter Achse bei höheren Geschwindigkeiten eine deutlich verbesserte Seitensteifigkeit auf. Gleichzeitig wird durch die freie Lenkbarkeit bei niedrigen Geschwindigkeiten eine Verringerung des Reifenverschleißes erreicht.

Eine weitere ähnliche lenkvorrichtung ist durch die EP 1 215 104 bekannt.

Aufgabe der Erfindung ist es, eine Lenkvorrichtung zur weiteren Verbesserung der Fahrstabilität von Fahrzeugen mit Seitenkraft gelenkter Achse zu schaffen, insbesondere zur Verringerung der Gefahr des Übersteuerns.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, die Feststellung bzw. Sperrung einer Seitenkraft gelenkten Achse auf der Basis mehrerer Kriterien zu regeln, nämlich in Abhängigkeit von der Fahrzeuggeschwindigkeit und zusätzliche in Abhängigkeit von die momentane Fahrstabilität bzw. Spurtreue des Fahrzeuges charakterisierende Größen.

Der Fahrzustand eines Fahrzeuges kann näherungsweise durch eine komplizierte Vektorgröße beschrieben werden, die beispielsweise aus den Komponenten Raddrehzahlen, Radbeschleunigungen, Schlupfwerte an einzelnen Rädern, translatorische und rotatorische Fahrzeugbeschleunigung bzw. Gierrate, Fahrzeugmasse, Achslastverteilung, Lenkwinkel, Motordrehmoment, Bremsmomente an einzelnen Rädern etc. besteht.

Durch eine Überwachung einer Vielzahl derartiger Größen und durch einen Vergleich mit vorgegebenen "kritischen" Einzelwerten bzw. kritischen Kombinationen von Einzelwerten kann die momentane Fahrstabilität des Fahrzeuges realistischer abgeschätzt werden. Wenn eine kritische Fahrsituation erkannt wird, kann die Fahrstabilität, insbesondere die Seitenstabilität bei Kurvenfahrt durch eine Sperrung der Seitenkraft gelenkten Achse verbessert werden.

Für die Fahrzustandsüberwachung kann ein bei modernen Fahrzeugen üblicherweise ohnehin vorhandenes elektronisches Stabilitätssystem verwendet werden. Zusätzlich zur Sperrung der Seitenkraft gelenkten Hinterachse können Eingriffe in das Motordrehmoment sowie Bremseingriffe an einzelnen oder mehreren Rädern vo-rgenommen werden.

Nach einer Weiterbildung der Erfindung wird eine zur Sperrung der Seitenkraft gelenkten Achse vorgesehene Feststelleinrichtung durch eine zentrale Steuerelektronik des Fahrzeuges angesteuert. Sofern sich der Fahrzustand des Fahrzeuges durch den Regeleingriff wieder stabilisiert hat, kann die Seitenkraft gelenkte Achse wieder "freigegeben" werden.

Nach einer Weiterbildung der Erfindung erfolgt eine erneute Freigabe erst dann, wenn vorgegebene, eine kritische Fahrsituation charakterisierende Werte für eine bestimmte Mindestzeitdauer von beispielsweise 3-5 s unterschritten sind, d.h. wenn sich das Fahrzeug hinreichend lang stabilisiert hat.

Die Feststelleinrichtung kann beispielsweise hydraulisch oder pneumatisch betätigbar sein.

Nach einer Weiterbildung der Erfindung sind an den gegenüberliegenden Rädern der Seitenkraft gelenkten Achse Lenkhebel vorgesehen, die gelenkig über eine Spurstange miteinander verbunden sind. Einer der beiden Lenkhebel kann beispielsweise eine "Verlängerung" aufweisen, die als Feststellhebel dient und in einen Feststellmechanismus eingreift.

Im folgenden wird die Erfindung anhand eines Ausführungsbeispieles im Zusammenhang mit der Zeichnung näher erläutert.
Es zeigen:
- Fig. 1: eine Prinzipskizze eines dreiachsigen Fahrzeuges mit Seitenkraft gelenkter Achse bei einer Kurvenfahrt; und
- Fig. 2: eine detailliertere Darstellung des Fahrzeuges gemäß Fig. 1.

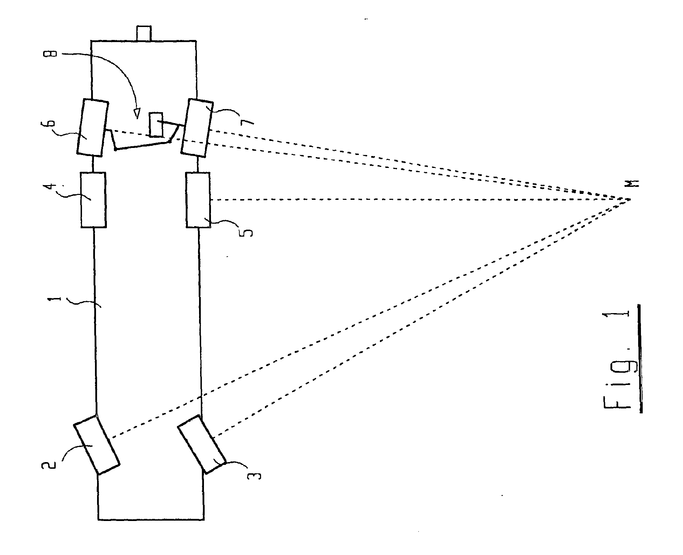

Fig. 1 zeigt ein Fahrzeug 1, z.B. einen Bus, mit einer vom Fahrer über das Lenkrad lenkbaren Vorderachse, die durch zwei Räder 2 und 3 gebildet ist. Das Fahrzeug 1 weist ferner eine starre, d.h. nicht lenkbare angetriebene Hinterachse mit Hinterrädern 4 und 5 auf. "Hinter" der Hinterachse ist eine Seitenkraft gelenkte Nachlaufachse vorgesehen, die durch die Räder 6 und 7 gebildet ist, welche über einen Lenkmechanismus 8 miteinander gekoppelt sind.

Bei einer Kurvenfahrt gibt der Fahrer über die Vorderräder 2 und 3 einen Lenkeinschlag vor. Bei stabiler Fahrt können sich die über den Lenkmechanismus 8 gekoppelten Räder 6 und 7 frei bewegen. Durch die zwischen der Fahrbahn und den Rädern 6 und 7 auftretenden seitlichen Zwangskräfte stellt sich an der Seitenkraft gelenkten Achse automatisch ein entsprechender Lenkeinschlag ein. Bei dem in Fig. 1 gezeigten Lenkeinschlag der Räder 2, 3 und 6, 7 haben sämtliche Räder 2-7 einen gemeinsamen fiktiven Momentanpol M, was eine stabile Kurvenfahrt ermöglicht.

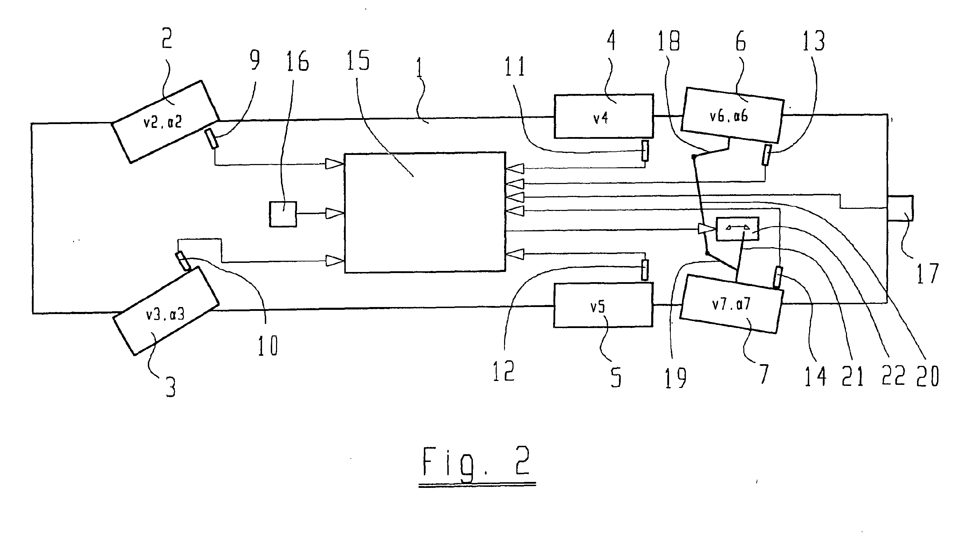

Fig. 2 zeigt eine vergrößerte Darstellung des Fahrzeuges der Fig. 1. Jedem der Räder 2-7 ist ein Radsensor 9-14 zur Ermittlung der Raddrehzahlen V2-V7 und zur Ermittlung der Lenkwinkel α2, α3, α6, α7 der Räder 2, 3, 6,7 zugeordnet. Die von den Sensoren 9-14 gelieferten Signale werden von einer Steuerelektronik 15 ausgewertet. Rein exemplarisch sind noch zwei weitere Sensoren dargestellt, nämlich ein Gierratensensor 16 sowie ein Koppelkraftsensor 17, der die Koppelkraft am Königszapfen ermittelt. Alternativ bzw. ergänzend dazu können weitere Sensoren zur Überwachung der momentanen Fahrstabilität vorgesehen sein, beispielsweise Bremsdrucksensoren zur Ermittlung der Bremsdrücke an einzelnen Rädern, Lastsensoren zur Ermittlung der Achslastverteilung und der Masse des Fahrzeuges, Längs- bzw. Querbeschleunigungssensoren etc.

Die beiden Räder 6 und 7 der Seitenkraft gelenkten Achse weisen jeweils einen fest mit der Radaufhängung verbundenen Lenkhebel 18 bzw. 19 auf. Die beiden Lenkhebel18, 19 sind gelenkig über eine Spurstange 20 miteinander verbunden. Die beiden Räder 6 und 7 haben somit einen gemeinsamen "Lenkfreiheitsgrad". Der Lenkhebel 19 des Rades 7 weist eine "Verlängerung" auf, die als Arretierungs- bzw. Feststellhebel 21 dient. Bei einer Lenkbewegung der Räder 6, 7 schwenkt der Feststellhebel 21 mit. Durch eine hier nur schematisch dargestellte Feststelleinrichtung 22 ist der Feststellhebe121 arretierbar. Durch die Feststelleinrichtung 22 können also beide Räder 6 und 7 "gesperrt" werden.

Die Feststelleinrichtung 22 ist elektronisch durch die Steuereinrichtung 15 ansteuerbar, und zwar in Abhängigkeit von der Fahrzeuggeschwindigkeit und einer Vielzahl von durch hier nur schematisch dargestellte Sensoren 9-14, 16, 17 sensierte, die Fahrstabilität charakterisierende Messgrößen.

Zusammenfassend kann die Erfindung folgendermaßen charakterisiert werden:

Der grundsätzliche Erfindungsgedanke besteht darin, bei einem Fahrzeug mit einer oder mehreren Seitenkraft gelenkten Hinterachsen die Hinterachslenkungen nicht nur geschwindigkeitsabhängig zu blockieren, sondern auch im Falle des Übersteuerns bzw. bei anderen kritischen Fahrsituationen. Dies kann beispielsweise durch "Aufrüsten" eines ohnehin im Fahrzeug vorgesehenen elektronischen Stabilitätssystems erreicht werden, das die Feststelleinrichtung für die Seitenkraft gelenkte Hinterachse ansteuert, d.h. bei Bedarf sperrt und nach kritischen Situationen wieder freigibt.

Geeignet ist diese Lenkvorrichtung z.B. für einen Bus mit drei Achsen, bei dem die mittlere Hinterachse angetrieben ist und die letzte Achse per Seitenkraft gelenkt wird und ab ca. 40 km/h mittels Pneumatik- oder Hydraulikzylindern verriegelt wird. Der Bus ist beispielsweise mit einem herkömmlichen elektronischen Stabilitätssystem ausgerüstet, das in der Lage ist, ein Übersteuern zu erkennen. Wenn das Übersteuern des Busses einen bestimmten Schwellwert überschreitet, wird vorn elektronischen Steuergerät mittels eines digitalen Ausgangs über ein Pneumatik- oder Hydraulikventil der Verriegelungsmechanismus betätigt und die Seitenkraft gelenkte Hinterachse gesperrt, wodurch sich eine zusätzliche Seitenführungskraft an der gelenkten Hinterachse aufbaut, welche das Fahrzeug stabilisiert. Nachdem das Fahrzeug wieder eine gewisse Zeit stabil geradeaus fährt, z.B. für eine Zeitdauer von 3-5 s, wird der Verriegelungsmechanismus wieder gelöst und die Hinterachslenkung wieder freigegeben.

Selbstverständlich-können in einem Fahrzeug auch mehrere solcher sperrbarer, Seitenkraft gelenkter Achsen vorgesehen sein.

## Patentansprüche

1. Lenkvorrichtung für Fahrzeuge mit einem Radpaar, das in Abhängigkeit vom aktuellen Fahrzustand des Fahrzeuges frei lenkbar oder dessen Lenkstellung durch eine elektronisch ansteuerbare Feststelleinrichtung feststellbar ist, mit einer Steuerelektronik und mit der Steuerelektronik verbundenen Sensoren zur Überwachung aktueller Fahrzustandswerte, wobei die Steuerelektronik die Feststelleinrichtung bei Überschreiten einer Mindestgeschwindigkeit des Fahrzeuges so ansteuert, dass die Lenkstellung des Radpaares festgestellt ist,
**dadurch gekennzeichnet,**
**dass** in der Steuerelektronik (15) zusätzlich kritische Fahrsituationen charakterisierende Fahrzustandswerte gespeichert sind,
**dass** in kritischen Fahrsituationen die Lenkstellung des Radpaares (6, 7) festgestellt ist, und
**dass** nach einer kritischen Fahrsituation die Feststelleinrichtung (22) erst dann das Radpaar (6, 7) wieder freigibt, wenn vorgegebene kritische Fahrzustandswerte mindestens für eine vorgegebene Zeitdauer unterschritten sind.

2. Lenkvorrichtung nach Anspruch 1, **dadurch gekennzeichnet, dass** in der Steuerelektronik (15) Kombinationen von Fahrzustandswerten gespeichert sind, die kritische Fahrsituationen charakterisieren.

3. Lenkvorrichtung nach Anspruch 1, **dadurch gekennzeichnet, dass** kritische Fahrsituationen, dann angenommen werden, wenn das Fahrzeug (1) zum Übersteuern neigt.

4. Lenkvorrichtung nach einem der Ansprüche 1 bis 3, **dadurch gekennzeichnet, dass** die Zeitdauer 3-5 s beträgt.

5. Lenkvorrichtung nach einem der Ansprüche 1 bis 4, **dadurch gekennzeichnet, dass** die Steuerelektronik (15) in ein elektronisches Fahrstabilitätssystem integriert ist, wobei die Betätigung der Feststelleinrichtung (22) gleichzeitig mit einem durch das Fahrstabilitätssystem gesteuerten Motordrehmoment- bzw. Bremseingriff möglich ist.

6. Lenkvorrichtung nach einem der Ansprüche 1 bis 5, **dadurch gekennzeichnet, dass** die Räder (6, 7) des Radpaares auf gegenüberliegenden Seiten des Fahrzeuges (1) angeordnet sind, dass jedes Rad (6, 7) des Radpaares einen Lenkhebel (18, 19) aufweist, die gelenkig über eine Spurstange (20) miteinander verbunden sind.

7. Lenkvorrichtung nach Anspruch 6, **dadurch gekennzeichnet, dass** die Feststelleinrichtung (22) an einem der beiden Lenkhebel (18, 19) angreift.

8. Lenkvorrichtung nach Anspruch 6 oder 7, **dadurch gekennzeichnet, dass** einer der beiden Lenkhebel (18, 19) einen den Lenkhebel (19) verlängernden Feststellhebel (21) aufweist und die Feststelleinrichtung (22) an dem Feststellhebel (21) angreift.

9. Lenkvorrichtung nach einem der Ansprüche 1 bis 8, **dadurch gekennzeichnet, dass** die Feststelleinrichtung (22) pneumatisch betätigbar ist.

10. Lenkvorrichtung nach einem der Ansprüche 1 bis 8, **dadurch gekennzeichnet, dass** die Feststelleinrichtung (22) hydraulisch betätigbar ist.

## Claims

1. Steering device for vehicles including a pair of wheels that is freely steerable in response to the actual driving state of the vehicle or whose steering position can be locked by an electronically controllable locking device, comprising an electronic controller system and sensors connected to said electronic controller system for monitoring actual values of the driving state, with said electronic controller system controlling said locking device, when a minimum speed of the vehicle is exceeded, in such a way that the steering position of the pair of wheels is locked,
**characterised in**
**that** additionally values of the driving state, which are characteristic of critical driving situations, are stored in said electronic controller system (15),
**that** the steering position of said pair of wheels (6, 7) is locked in critical driving situations, and
**that** after a critical driving situation, said locking device (22) releases said pair of wheels (6, 7) only when the values have dropped below predetermined values of critical driving states at least for a predetermined period of time.

2. Steering device according to Claim 1, **characterised in that** combinations of values of the driving state are stored in said electronic controller system (15), which are characteristic of critical driving states.

3. Steering device according to Claim 1, **characterised in that** critical driving situations are assumed to prevail whenever the vehicle (1) has an oversteering tendency.

4. Steering device according to any of the Claims 1 to 3, **characterised in that** said period corresponds to 3 - 5 seconds.

5. Steering device according to any of the Claims 1 to 4, **characterised in that** said electronic controller system (15) is integrated into an electronic driving stability system, with the actuation of said locking device (22) being possible simultaneously with an intervention into the engine torque or the brake operation under control by said driving stability system.

6. Steering device according to any of the Claims 1 to 5, **characterised in that** said wheels (6, 7) of said pair of wheels are mounted on opposite sides of the vehicle (1), and that each wheel (6, 7) of said pair of wheels comprises a steering lever (18, 19), which levers are articulated to each other via a track rod (20).

7. Steering device according to Claim 6, **characterised in that** said locking device (22) is engaged on one of said two steering levers (18, 19).

8. Steering device according to Claim 6 or 7, **characterised in that** one of said two steering levers (18, 19) comprises a locking lever (21) extending said steering lever (19), and that said locking device (22) is engaged on said locking lever (21).

9. Steering device according to any of the Claims 1 to 8, **characterised in that** said locking device (22) is adapted to be pneumatically operated.

10. Steering device according to any of the Claims 1 to 8, **characterised in that** said locking device (22) is adapted to be hydraulically operated.

## Revendications

1. Dispositif de renvoi de direction pour véhicules comprenant une paire de roues, qui est librement dirigeable en réponse à l'état de marche actuel du véhicule ou dont la position de braquage peut être arrêtée moyennant un dispositif d'arrêt à commande électronique, comprenant un système électronique de commande et des détecteurs reliés audit système électronique de commande afin de surveiller les valeurs actuelles de l'état de marche, audit système électronique de commande commandant ledit dispositif d'arrêt, quand une vitesse minimum est surpassée, d'une telle manière, que la position de braquage de ladite paire de roues soit arrêtée,
**caractérisé en ce**
**qu'**au plus, des valeurs de l'état de marche, qui sont caractéristiques des situations de marche critiques, sont mises en mémoire dans ledit système électronique de commande (15),
**que** la position de braquage de ladite paire de roues (6, 7) est arrêtée en situations de marche critiques, et en ce
**qu'**après une situation de marche critique, ledit dispositif d'arrêt (22) ne libère ladite paire de roues (6, 7) que quand les valeurs ont tombé au-dessous des valeurs prédéterminées des états de marche critiques au moins pour un intervalle prédéterminé.

2. Dispositif de renvoi de direction selon la revendication 1, **caractérisé en ce que** des combinaisons de valeurs de l'état de marche sont mises en mémoire dans ledit système électronique de commande (15), qui sont caractéristiques des états de marche critiques.

3. Dispositif de renvoi de direction selon la revendication 1, **caractérisé en ce que** des situations de marche critiques sont présumées quand le véhicule (1) tend à survirer.

4. Dispositif de renvoi de direction selon une quelconque des revendications 1 à 3, **caractérisé en ce que** ledit intervalle correspond à 3 - 5 secondes.

5. Dispositif de renvoi de direction selon une quelconque des revendications 1 à 4, **caractérisé en ce que** ledit système électronique de commande (15) est intégré dans un système électronique de stabilité en marche, à la commande dudit dispositif d'arrêt (22) étant possible en même temps qu'une intervention dans le couple du moteur ou le serrage des freins à la commande par ledit système électronique de stabilité en marche.

6. Dispositif de renvoi de direction selon une quelconque des revendications 1 à 5, **caractérisé en ce que** lesdites roues (6, 7) de ladite paire de roues sont montées aux côtés opposés du véhicule (1), et **en ce que** chaque roue (6, 7) de ladite paire de roues comprend un levier de commande de roue (18, 19), ces leviers étant articulé l'un à l'autre via une barre d'accouplement (20).

7. Dispositif de renvoi de direction selon la revendication 6, **caractérisé en ce que** ledit dispositif d'arrêt (22) est appliqué à un desdits deux leviers de commande de roue (18, 19).

8. Dispositif de renvoi de direction selon la revendication 6 ou 7, **caractérisé en ce qu'**un desdits deux leviers de commande de roue (18, 19) comprend un levier d'arrêt (21), qui prolonge ledit levier de commande de roue (19), et **en ce que** ledit dispositif d'arrêt (22) est appliqué audit levier d'arrêt (21).

9. Dispositif de renvoi de direction selon une quelconque des revendications 1 à 8, **caractérisé en ce que** ledit dispositif d'arrêt (22) est apte à être commandé de manière pneumatique.

10. Dispositif de renvoi de direction selon une quelconque des revendications 1 à 8, **caractérisé en ce que** ledit dispositif d'arrêt (22) est apte à être commandé de manière hydraulique.
